# EUROPÄISCHE PATENTANMELDUNG

(11) **EP 1 514 847 A2**
(43) Veröffentlichungstag der Anmeldung: **16.03.2005**
(21) Anmeldenummer: 04020498.4
(22) Anmeldetag: 28.08.2004
(51) Int. Cl.: C01G 39/00, C22B 3/00, C22B 34/30

(54) **Reinigung von Ammoniummetallat-Lösungen**

(30) Priorität: 10.09.2003 DE 10341727
(71) Anmelder: H.C. Starck GmbH, 38642 Goslar (DE)
(72) Erfinder: Stoller, Viktor, 38667 Bad Harzburg (DE); Meese-Marktscheffel, Juliane, Dr., 38642 Goslar (DE); Olbrich, Armin, Dr., 38723 Seesen (DE); Erb, Michael, 38259 Salzgitter (DE); Gille, Gerhard, Dr., 38640 Goslar (DE)
(74) Vertreter: Peters, Frank, Dr.

(57) **Zusammenfassung**

Verfahren zur Verringerung des Gehalts an Alkalimetall-Verunreinigungen, insbesondere von Kalium, in Ammoniummetallat-Lösungen, wobei die Ammoniummetallat-Lösung einer Membranfiltration unterzogen wird, und wobei vorzugsweise das bei der Membranfiltration entstehende Permeat zur Entfernung von darin angereicherten Alkalimetall-Verunreinigungen mit einem Kationenaustauscher behandelt und nach dieser Behandlung mit dem Retentat der Membranfiltration vereinigt wird.

## Beschreibung

Die Erfindung betrifft ein Verfahren zur Herstellung hochreiner Ammoniummetallat-Lösungen, insbesondere hochreiner Ammoniummolybdat-Lösungen, durch Behandlung technischer Ammoniummetallat-Lösungen mittels Membranfiltration.

Ammoniummetallate lassen sich in der Regel gut kristallisieren und durch thermische Behandlung in Metalloxide überführen. Diese können zu den entsprechenden Metallen reduziert werden. Insbesondere Ammoniummetallate des Molybdäns, beispielsweise Ammoniummolybdat, Ammoniumdimolybdat und Ammoniumpolymolybdat, aber auch anderer oxoanionenbildender Metalle, wie beispielsweise Wolfram, Rhenium, Vanadium, Niob oder Tantal, sind daher wertvolle Verbindungen zur Gewinnung entsprechender Metalloxide oder Metalle.

Für eine Reihe von Anwendungen ist es entscheidend, dass die eingesetzten Metalle oder Metallverbindungen einen möglichst geringen Gehalt an Verunreinigungen aufweisen. Die Gewinnung von reinem Molybdän bzw. reinen Molybdänverbindungen erfolgt in der Regel ausgehend von Molybdänit-Konzentraten durch Oxidation, üblicherweise Abröstung des Sulfids an Luft zum technischen Molybdäntrioxid. Dieses enthält eine ganze Palette von Verunreinigungen, die je nach Herkunft und Zeitpunkt der Förderung der entsprechenden Molybdänit-Erze in Art und Konzentration stark schwanken können. Für die verschiedenen Verwendungen des Molybdäns, beispielsweise als Legierungsbestandteil in Stählen, zur Drahtherstellung, als Katalysatorkomponente oder als Pigment, werden sehr unterschiedliche Anforderungen an die Reinheit des Molybdänmetalls bzw. der Molybdänverbindung gestellt. Daher wurden eine Reihe unterschiedlicher Verfahren zur Aufarbeitung und Reinigung von Molybdän oder dessen Verbindungen entwickelt, die beispielsweise die Prinzipien Fällung/Kristallisation, Extraktion oder Ionenaustausch nutzen. Besonders effektiv lassen sich Verunreinigungen, insbesondere auch Alkalimetalle durch Sublimation des Röstguts entfernen. Diese Methode ist aber sehr aufwändig und großtechnisch wirtschaftlich nicht praktikabel.

Naturgemäß verhalten sich nicht alle Verunreinigungen gleich, sowohl was die noch tolerierbaren Mengen im Produkt, als auch was die Abtrennbarkeit betrifft. Insbesondere das Element Kalium kann nur mit erheblichem Aufwand vom Molybdän abgetrennt werden. Der Kalium-Gehalt muss in der Regel < 50-100 ppm betragen, um Molybdän-Pulver zu erzeugen, die zur Produktion von Drähten, Stäben, Folien, Sinterteilen, sowie speziellen Legierungen geeignet sind. Auch der Molybdän-Einsatz im Bereich Katalysatoren bzw. Pigmente erfordert oftmals chemisch reine, insbesondere Kalium-arme Molybdänsalze.

US-A 4,612,172 beschreibt ein Verfahren zur Entfernung von Kalium aus MoO₃ durch Laugung mit einem Gemisch aus Mineralsäure und Ammoniumsalz der Mineralsäure, wobei das Gemisch in einem dreifachen Überschuss zum Molybdänoxid eingesetzt werden soll. Dieses Verfahren wird auch in der EP 191 148 A2 aufgegriffen, wobei hier mehrfach gelaugt wird, um den Kaliumgehalt auf einen Wert von ca. 50 ppm zu senken. Gemäß US-A 4,596,701, US-A 4,525,331, US-A 4,604,266 und US-A 4,601,890 lässt sich die Reinigung von MoO₃ durch Laugung mit einem Gemisch aus Mineralsäure und dem Ammoniumsalz einer Mineralsäure optimieren, indem nach der Laugung das Molybdäntrioxid mit Ammoniumhydroxid zu Ammoniummolybdat umgesetzt, die Ammoniummolybdat-Lösung mit einem Kationenaustauscher in Kontakt gebracht und schließlich das so gereinigte Ammoniummolybdat kristallisiert und kalziniert wird. Die Verfahren unterscheiden sich im Wesentlichen durch die Wahl des Säure/Ammoniumsalz-Gemisches. Bei den genannten Verfahren handelt es sich um vergleichsweise aufwändige, mehrstufige Verfahren, die den Einsatz großer Mengen an Laugungsmittel erfordern, und den weiteren Nachteil aufweisen, dass Molybdänanteile, die bei der Laugung zusammen mit den Verunreinigungen in Lösung gehen, nicht wiedergewonnen werden.

Zur Vermeidung des Verlusts von Molybdän durch die Laugung schlägt US-A 4,933,152 ein Verfahren vor, bei dem eine erste Laugung mit Salpetersäure/Ammoniumnitrat und eine zweite Laugung mit Salpetersäure erfolgt, wobei die Mutterlaugen rezykliert werden. Auf diese Weise kann der Prozess kontinuierlich geführt werden und die Molybdänanteile verbleiben im System. Dennoch ist auch dieses Verfahren mit dem großen Nachteil behaftet, dass technisch aufwändige Laugungs-/Filtrationsreaktionen mehrfach durchgeführt und große Mengen salpetersaurer Lösungen gehandhabt und in Kreisläufen geführt werden müssen.

Gemäß US-A 3,848,049 lassen sich Verunreinigungen aus einem gerösteten Molybdänoxid-Konzentrat auch durch Laugung mit Wasser entfernen, wobei die Laugung gegebenenfalls in Gegenwart eines Kationenaustauscherharzes durchgeführt wird. Der Rückstand wird durch Zugabe von Ammoniumhydroxid in Ammoniummolybdat überführt, das anschließend kristallisiert wird und weiterverarbeitet werden kann. Der Gehalt an Kalium im Produkt ist in Beispiel 2 mit 150 ppm angegeben und liegt damit immer noch über dem Wert, der für viele Anwendungen toleriert werden kann. Um die Abtrennbarkeit von Kalium zu erhöhen, schlägt US-A 3,393,971 eine besondere Temperaturbehandlung des Molybdänoxids vor. Auch gemäß US-A 4,207,296 soll die Löslichkeit von Kalium in heißem Wasser dadurch erhöht werden, dass das Molybdänoxid einer Temperaturbehandlung unterzogen wird. Es wird auf mindestens 525°C erhitzt und dann mit einer Rate von mindestens 30°C pro Minute auf eine Temperatur kleiner 400°C abgekühlt. Entsprechende Temperaturbehandlungen sind apparativ und regeltechnisch aufwändig und führen in der Regel nicht zu reproduzierbaren Restgehalten an Kalium. Technisch interessant könnte ein solches Vorgehen nur für diejenigen Verarbeiter von Molybdänerzen sein, die selbst eine Röstung von Molybdänit durchführen. Zur weiteren Reinigung von technischem Molybdänoxid oder anderen Molybdänverbindungen ist ein solches Vorgehen, unter anderem wegen des hohen Energieaufwands unattraktiv.

Ein anderes Konzept zur Entfernung von Verunreinigungen, insbesondere auch von Kalium, aus Molybdän oder dessen Verbindungen ist die Solventextraktion. Dabei wird Natriummolybdat durch saure Extraktion zunächst in eine organische Phase überführt, wobei die Verunreinigungen im Raffinat zurückbleiben. Anschließend wird das Molybdat durch Strippen mit Ammoniak in Form von Ammoniummolybdat wieder aus der organischen Phase entfernt. Es lassen sich so sehr reine Ammoniummolybdat-Lösungen gewinnen, wobei das Verfahren jedoch sehr aufwändig und kostenintensiv ist. Nachteilig ist insbesondere, dass große Mengen an organischem Lösungsmittel eingesetzt werden müssen.

Aufgabe der vorliegenden Erfindung war es also, ein einfaches und wirtschaftliches Verfahren zur Verfügung zu stellen, das es erlaubt, Alkalimetall-Verunreinigungen, insbesondere Kalium, aus Ammoniummetallat-Lösungen zu entfernen, wobei nicht mit großen Mengen an saurem Laugungsmittel oder organischem Lösungsmittel gearbeitet werden muss.

Diese Aufgabe lässt sich auf sehr einfache Weise dadurch lösen, dass die zu behandelnde Ammoniummetallat-Lösung einer Membranfiltration unterzogen wird.

Gegenstand der Erfindung ist also ein Verfahren zur Verringerung des Gehalts an Alkalimetall-Verunreinigungen in Ammoniummetallat-Lösungen, wobei die Ammoniummetallat-Lösung einer Membranfiltration unterzogen wird.

Es hat sich gezeigt, dass es nicht möglich ist, Kalium in hinreichender Menge aus hochammoniumhaltigen Metallat-Lösungen über Ionenaustauscher abzutrennen. Dies gelingt jedoch, wenn die Metallat-Lösung erfindungsgemäß zunächst einer Membranfiltration unterzogen wird. Dabei diffundiert die Hauptmenge an Alkalimetall-Verunreinigung durch die Membran, während der Großteil des Metallats zurückgehalten wird. Durch das nun günstigere, d.h. kleinere Verhältnis von Ammonium zu Kalium im Permeat der Membranfiltration kann Kalium selektiv auf einem geeigneten Kationenaustauscher zurückgehalten werden.

Das erfindungsgemäße Verfahren erlaubt die effektive Entfernung von Alkalimetall-Verunreinigungen aus Ammoniummetallat-Lösungen, wobei bei der erfindungsgemäß bevorzugten Kombination von Membranfiltration und Ionenaustausch, wobei der Ablauf der Ionenaustauschersäule, der das gereinigte Permeat enthält, wieder mit dem Retentat der Membranfiltration vereinigt wird, um erneut die Membranfiltrationseinheit zu passieren, ein logarithmischer Zusammenhang zwischen Abreicherung und Waschvolumen besteht und bereits nach einem 2,3-fachen Durchlaufen von Membranfiltration und Ionenaustausch ein Abreicherungsfaktor von 10 erreicht wird.

Das erfindungsgemäße Verfahren eignet sich zur Reinigung einer Vielzahl von Ammoniummetallat-Lösungen. Beispielhaft seien die Ammoniummetallate des Molybdäns, beispielsweise Ammoniummolybdat, Ammoniumdimolybdat und Ammoniumpolymolybdat, aber auch anderer metallatbildender Metalle, wie beispielsweise Wolfram, Rhenium, Vanadium, Niob oder Tantal genannt. In der Regel liegen die Ammoniummetallat-Lösungen in Form von wässrigen, alkalischen oder neutralen Lösungen vor und weisen einen Gehalt an Kalium von 200-5000 ppm, bezogen auf das Metall, auf.

Vorzugsweise werden Lösungen behandelt, die Ammoniummolybdat, Ammoniumdimolybdat und/oder Ammoniumpolymolybdat enthalten.

Durch das erfindungsgemäße Verfahren können alle Alkalimetall-Verunreinigungen effektiv abgetrennt werden. Die Alkalimetall-Verunreinigungen liegen in den Ammoniummetallat-Lösungen in gelöster Form vor, wobei die Alkalimetalle naturgemäß in Form ihrer Kationen vorliegen. Bevorzugt wird das erfindungsgemäße Verfahren immer dann eingesetzt, wenn es gilt, zuverlässig Kalium zu entfernen.

Erfindungsgemäß wird die zu reinigende Ammoniummetallat-Lösung einer Membranfiltration unterzogen. Dabei können herkömmliche Membranfiltrationsvor-richtungen eingesetzt werden, wobei die verwendete Membran so gewählt wird, dass sie eine hohe Durchlässigkeit für Alkalimetalle, aber eine möglichst niedrige Durchlässigkeit für die Metallat-Spezies aufweist. Beispielsweise können semipermeable Membranen auf Polymer- oder Keramikbasis, etwa perfluorierte Polypropylen-Membranen eingesetzt werden, die von der Firma DuPont unter der Bezeichnung Nafion® vertrieben werden. Vorzugsweise kommt der Typ NFM 1121, besonders bevorzugt Typ NFM 1120 zum Einsatz. Die Ammoniummetallat-Spezies wird im Retentat angereichert, die Alkalimetall-Verunreinigung im Permeat.

Der Gehalt an Alkalimetall-Verunreinigungen im Retentat ist bereits deutlich verringert, so dass dieses je nach gewünschter Anwendung bereits direkt zur Gewinnung von Ammoniummetallat verwendet werden kann. Dies erfolgt auf bekannte Weise, etwa durch Kristallisation, die beispielsweise durch Eindampfen der Lösung oder gezielte Änderung des pH-Werts erfolgen kann. Alternativ kann das Retentat auch direkt thermisch zum Metalloxid umgesetzt werden.

Da das bei der Membranfiltration entstehende Permeat jedoch ebenfalls noch wertvolle Metallatanteile enthält, wird vorzugsweise das Permeat zur Entfernung von darin angereicherten Alkalimetall-Verunreinigungen mit einem Kationenaustauscher behandelt und das Permeat nach der Behandlung mit dem Kationenaustauscher mit dem Retentat der Membranfiltration vereinigt.

Zur weiteren Reduktion des Anteils an Alkalimetall-Verunreinigungen wird das mit dem gereinigten Permeat wiedervereinigte Retentat vorzugsweise erneut der Membranfiltration unterzogen, das dabei entstehende Permeat wieder gereinigt und das so gereinigte Permeat mit dem nunmehr entstandenen Retentat vereinigt, so dass ein kontinuierlicher Kreislauf entsteht. Dieser Vorgang kann solange wiederholt werden, bis die Menge an Alkalimetall-Verunreinigungen in der Ammoniummetallat-Lösung unter einen vorgegebenen Wert gefallen ist, d.h. bis der gewünschte Abreicherungsgrad erreicht ist.

Diese Vorgehensweise unter Rückführung des Permeats in das Retentat bietet den Vorteil, dass die Membranfiltration unter praktisch konstanten osmotischen Bedingungen und damit sehr gleichmäßig und kontrolliert abläuft, wobei die Reaktionsführung in einem geschlossenen Kreislauf darüber hinaus mess- und regeltechnisch besonders einfach überwacht werden kann.

Die gereinigte Ammoniummetallat-Lösung kann dann, gegebenenfalls nach der Durchführung weiterer Reinigungsoperationen, der Weiterverarbeitung, d.h. in der Regel einer Aufkonzentrierung und Kristallisation zugeführt werden.

Als Kationenaustauscher können alle Kationenaustauscher eingesetzt werden, mit denen Alkalimetall-Kationen aus wässrigen Systemen entfernt werden können. Geeignete Kationenaustauscher stellen z.B. stark saure Austauscherharze oder Zeolithe dar. Zur Abtrennung von Kalium aus Ammoniummetallat-Lösungen, insbesondere aus Ammoniummolybdat-Lösungen, wird vorzugsweise Lewatit® MonoPlus TM S 100H, Lewatit® S110H der Firma Bayer oder Amberlit® IR-120 der Firma Merck eingesetzt.

Je nach Art des metallatbildenden Metalls kann es vorteilhaft sein, der zu behandelnden Ammoniummetallat-Lösung einwertige Anionen, wie z.B. Chlorid oder Nitrat zuzusetzen. In der Regel geschieht dies durch Zugabe der entsprechenden Ammoniumsalze oder Säuren. In Abhängigkeit von der Anionenkonzentration im Permeat kann es erforderlich sein, vorhandene Ammoniak-Anteile durch Destillation abzutrennen, wobei die Alkalimetall-Verunreinigungen als Salze im Sumpf verbleiben. Die destillierte wässrige Ammoniaklösung kann der zu behandelnden Ammoniummetallat-Lösung wieder zugeführt werden.

Je nach Rückhaltevermögen der in der Membranfiltration eingesetzten Membran für die zu reinigende Ammoniummetallat-Spezies, kann es vorteilhaft sein, wenn die Membranfiltration zweistufig durchgeführt wird, wobei die beiden Membranfiltrationsstufen als Gegenstromkaskaden geschaltet werden, und das Permeat der ersten Membranfiltration einer zweiten Membranfiltration zugeführt, das dabei entstehende zweite Permeat mit einem Kationenaustauscher behandelt, und das so gereinigte zweite Permeat mit dem Retentat der ersten Membranfiltration vereinigt wird. Natürlich kann die Membranfiltration auch in 3 oder mehr Stufen durchgeführt werden.

Mit dem erfindungsgemäßen Verfahren werden vorzugsweise gereinigte Ammoniummetallat-Lösung hergestellt, die bezogen auf das Metall, weniger als 1000 ppm Kalium, besonders bevorzugt weniger als 100 ppm Kalium aufweisen.

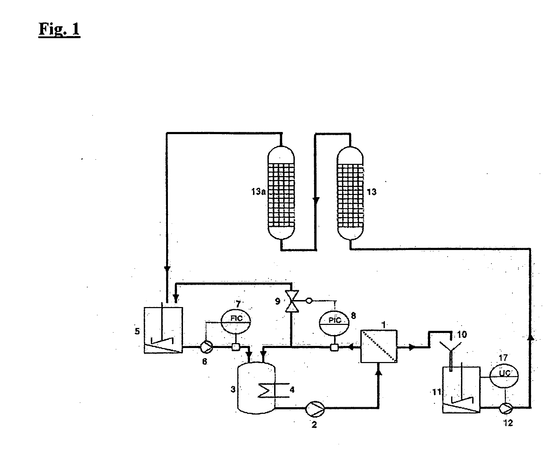

Die Fig. 1, 2 und 3 geben jeweils schematisch den Ablauf besonderer Ausführungsformen des erfindungsgemäßen Verfahrens wieder.

Das erfindungsgemäße Verfahren wird im Folgenden durch die Beschreibung dieser Ausführungsformen weiter erläutert, wobei diese Beschreibung nicht als Einschränkung des erfindungsgemäßen Prinzips zu verstehen ist, und für den Fachmann einsichtig ist, dass es eine Reihe weiterer möglicher Ausgestaltungen gibt.

Fig. 1 zeigt schematisch eine Ausführungsform des erfindungsgemäßen Verfahrens, in der die zu behandelnde Ammoniummetallat-Lösung mittels einer Membranfiltrationszelle (1) und zweier Kationenaustauschersäulen (13, 13a) von Alkalimetall-Verunreinigungen befreit wird.

Die zu reinigende Ammoniummetallat-Lösung wird dabei mittels der Umlaufpumpe (2) durch die Membranfiltrationszelle (1) gefördert. Im Kreislauf befindet sich eine als Druckbehälter ausgebildete Pumpenvorlage (3), die mit einem Wärmetauscher (4) ausgestattet ist, der es erlaubt, während des Betriebes entstehende Wärme abzuführen und eine konstante Temperatur aufrecht zu erhalten. Dem Kreislauf wird aus einem gerührten Vorratsbehälter (5) mittels einer Hochdruckpumpe (6) die Ammoniummetallat-Lösung zugeführt. Die Regelung erfolgt über den Fluss-Regler FIC (7). Die Ammoniummetallat-Lösung gelangt in die als Druckbehälter ausgebildete Pumpenvorlage (3), aus der sie mittels der Umlaufpumpe (2) in die Membranfiltrationszelle (1) gepumpt und dort in Retentat und Permeat aufgespalten wird. Das Retentat fließt über ein Regelventil (9) in den Vorratsbehälter (5) zurück, wobei der gewünschte Druck über den Druck-Regler PIC (8) eingestellt werden kann. Das Permeat, das deutlich geringere Konzentrationen an Metallat und Ammonium, aber annähernd die gleiche Konzentration an Kalium aufweist, wie die über die Hochdruckpumpe (6) der Membranfiltrationszelle (1) zugeführte Lösung, gelangt über einen freien Auslauf (10) in den gerührten Behälter (11), von wo aus es über die Pumpe (12) den Kationenaustauschersäulen (13) und (13a) zugeführt wird. Der Füllstand im Behälter (11) wird dabei mittels des Füllstands-Reglers LIC (17) eingestellt. Die beiden Kationenaustauschersäulen (13) und (13a) sind mit einem Kationenaustauscherharz beschickt, welches die Alkalimetall-Ionen aus dem Permeat aufnimmt. Im Ablauf der Säulen, von denen nicht notwendigerweise, aber vorteilhaft mehrere, insbesondere bevorzugt zwei Stück in Reihe geschaltet sind, läuft das gesamte Permeat zurück in den Vorratsbehälter (5), womit sich der Kreislauf schließt. Die ursprüngliche Konzentration an Kalium in der Ammoniummetallat-Lösung nimmt im Wesentlichen exponentiell mit der Anzahl der Durchläufe durch die Membranfiltrationszelle (1) ab.

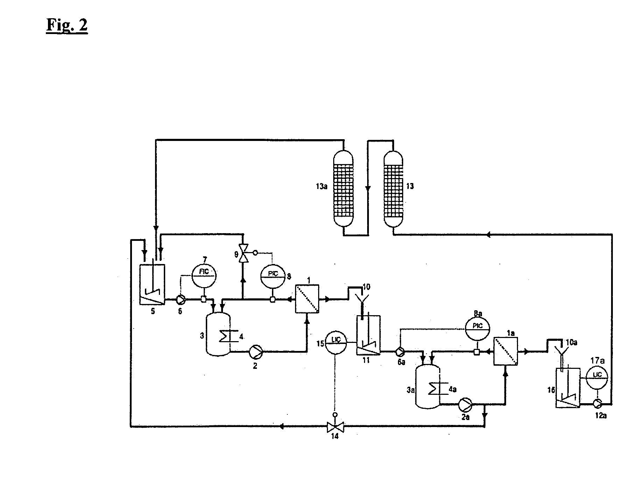

Fig. 2 zeigt schematisch eine weitere Ausführungsform des erfindungsgemäßen Verfahrens, wobei die zu behandelnde Ammoniummetallat-Lösung mittels zweier Membranfiltrations-zellen (1, 1a) und zweier Kationenaustauschersäulen (13, 13a) von Alkalimetall-Verunreinigungen befreit wird. Für Einheiten, die bereits bei der Verfahrensführung gemäß Fig. 1 zum Einsatz kommen, werden die Bezugszeichen beibehalten.

Für die mess- und regeltechnische Verschaltung ist in Fig. 2 eine Verfahrensvariante dargestellt, die nur einen Fluss-Regler FIC (7) in der ersten Membranfiltrations-Einheit benötigt. Es sind aber selbstverständlich auch andere Alternativen denkbar, beispielsweise die Regelung mittels zweier Fluss-Regler.

Die zu reinigende Ammoniummetallat-Lösung wird im Vorratsbehälter (5) vorgelegt und passiert die erste Membranfiltrations-Einheit genauso, wie bereits bei der Verfahrensvariante gemäß Fig. 1 beschrieben. Im Unterschied zur Verfahrensvariante gemäß Fig. 1 wird nunmehr jedoch in der Membranfiltrationszelle (1) eine Membran eingesetzt, deren Rückhaltevermögen gegenüber der zu reinigenden Metallat-Spezies nicht so groß ist, wie bei der einfacheren, ersten Variante, so dass nennenswerte Konzentrationen an Metallat und damit verbunden auch an Ammoniumionen im ersten Permeat auftreten, wobei die Ammoniumionen die gewünschte Abtrennung der Alkali-Ionen in einer nachgeschalteten Kationenaustauschersäule (13, 13a) erschweren oder gar verhindern. Als Membran kann beispielsweise die perfluorierte Membran des Typs Nafion NFM 1121 eingesetzt werden.

Das Problem wird dadurch gelöst, dass das erste Permeat aus dem Behälter (11) über eine zweite Hochdruckpumpe (6a) einer zweiten als Druckbehälter ausgebildete Pumpenvorlage (3a) mit einem Wärmetauscher (4a) und über die Umlaufpumpe (2a) schließlich einer zweiten Membranfiltrationszelle (1a) zugeführt wird, deren Membran so beschaffen ist, dass sie ausreichend zwischen den Metallat- und Alkalimetall-Ionen diskriminieren kann und trotzdem aufgrund des im ersten Permeat nun gegenüber der Ausganglösung deutlich verminderten osmotischen Drucks, hinreichende Permeatflüsse erlaubt. Eine geeignete Membran ist beispielsweise die perfluorierte Membran des Typs Nafion NFM 1120.

Das dem Behälter (11) zulaufende erste Permeat muss selbstverständlich vollständig weitergeleitet werden. Die reglungstechnische Verschaltung ist daher gegenüber der ersten Membranfiltrations-Einheit modifiziert, wobei die hier beschriebene Variante natürlich nur eine von vielen möglichen ist und somit keinen einschränkenden Charakter besitzt.

Die Hochdruckpumpe (6a) der zweiten Membranfiltrations-Einheit, die ansonsten wie die erste Membranfiltrations-Einheit aufgebaut ist, wird druckgeregelt durch den zweiten Druckregler PIC (8a) betrieben. Ein konstanter Füllstand im Behälter (11) wird dadurch gewährleistet, dass der Regler LIC (15) auf das Ventil (14) wirkt, über welches das Retentat der zweiten Membranfiltrations-Einheit durch die Umlaufpumpe (2a) zurück in den Vorratsbehälter (5) gefördert wird. Somit ergibt sich eine Gegenstromkaskade.

Das über den zweiten freien Auslauf (10a) ablaufende zweite Permeat hat nun eine vergleichbare Qualität, d. h. ein hinreichend günstiges Alkali-zu-Ammonium-Verhältnis wie nach Versuchführung entsprechend Fig. 1, so dass es aus dem zweiten Behälter (16) mit der Pumpe (12a), geregelt mittels Füllstands-Regler LIC (17a) entsprechend der in Fig. 1 dargestellten Verfahrensvariante, den Kationenaustauschersäulen (13) und (13a) zugeführt werden kann, wobei deren Ablauf in den Vorratsbehälter (5) den Kreislauf erneut schließt.

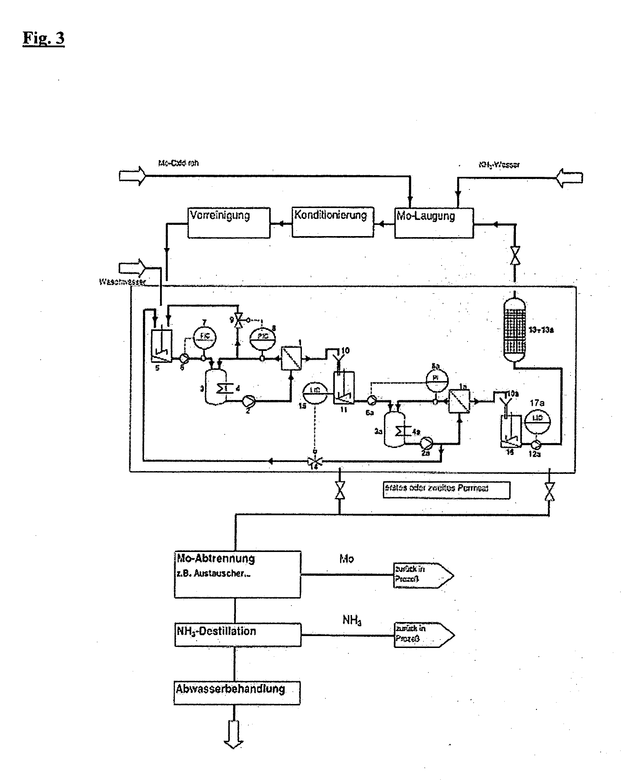

Fig. 3 zeigt weitere Ausführungsformen des erfindungsgemäßen Verfahrens, wobei andere Aufarbeitungsmöglichkeiten für die gewonnenen Permeate skizziert werden. Für Einheiten, die bereits bei der Verfahrensführung gemäß Fig. 1 oder Fig. 2 zum Einsatz kommen, werden die Bezugszeichen beibehalten.

In Fig. 1 und Fig. 2 sind bevorzugte Verfahrensvarianten dargestellt, die es durch Zusammenschaltung von Membranfiltrationszelle (1, 1a) und Kationenaustauschersäulen (13, 13a) erlauben, in einem bezüglich der Metallat-Anteile vollkommen geschlossenen Kreislauf zu arbeiten. Dieses Vorgehen kann je nach Gegebenheiten im Betrieb aber auch modifiziert werden. So kann beispielsweise der Ablauf aus den Kationenaustauschersäulen (13) bzw. (13a) nicht in den Vorratsbehälter (5) zurückgeführt werden, sondern beispielsweise zum Laugen von technischem Molybdäntrioxid vorgelegt werden. Dem Vorratsbehälter (5) kann dann frisches Waschwasser, insbesondere Ammoniak-Lösung zugegeben werden.

Die Permeate können aber auch vor der Abtrennung der Alkalimetall-Verunreinigungen mittels Kationenaustauscher einer Abtrennung des Metallats, z.B. durch Behandlung des Permeats mit einem Anionenaustauscher zugeführt werden. Der resultierende Säulenablauf, der die Alkalimetall-Verunreinigungen enthält, kann, gegebenenfalls nach Abdestillieren des Ammoniaks einer Abwasserbehandlung unterzogen werden. Das Abdestillieren des Ammoniaks kann gegebenenfalls auch vor der Behandlung des Permeats mit einem Anionenaustauscher erfolgen.

Die in Fig. 3 dargestellte Verfahrensführung, bei der die Metallat-Anteile nicht im geschlossenen Kreislauf geführt werden, bietet sich insbesondere auch für eine kontinuierliche Verarbeitung von Rohlaugen an.

Die folgenden Beispiele dienen der näheren Erläuterung der Erfindung, wobei die Beispiele das Verständnis des erfindungsgemäßen Prinzips erleichtern sollen, und nicht als Einschränkung desselben zu verstehen sind.

### Beispiele

### Beispiel 1

Gemäß der Verfahrensvariante, wie sie in Fig. 1 dargestellt ist, wurden 7,4 m³ Ammoniumdimolybdat-Lösung mit einem Mo-Gehalt von 150 g/l in den Vorratsbehälter (5) eingefüllt. Die Gehalte an Alkalimetall-Verunreinigungen der Lösung betrugen 750 mg/l K, sowie 600 mg/l Na. Das restliche System war mit verdünnter Ammoniumdimolybdat-Lösung mit einem Mo-Gehalt von ca. 2 g/l Mo beschickt. Mittels Hochdruckpumpe (6), Umlaufpumpe (2), Fluss-Regler (7) und Druckregler (8) wurde ein Permeatfluss von 4,6 m³/h eingestellt. Die eingesetzte Membranfiltrationszelle (1) wies eine Membranfläche von 130 m² auf, wobei als Membran eine Nafion®-Membran NFM 1120 eingesetzt wurde. Das aus der Membranfiltrationszelle (1) austretende Permeat floss über den freien Auslauf (10) in dem Behälter (11) und wurde mittels Pumpe (12) über die Kationenaustauschersäulen (13) und (13a) geleitet, um die Alkalimetall-Verunreinigungen aus dem Permeat zu entfernen. Die Kationenaustauschersäulen (13) und (13a) waren mit dem Kationenaustauscher Lewatit® S 100 H beschickt. Das gereinigte Permeat wurde wieder in den Vorratsbehälter (5) gefördert.

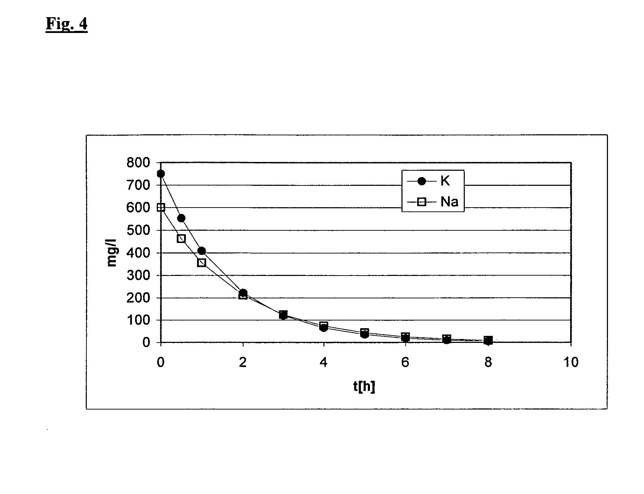

Der zeitliche Verlauf der Konzentration an Kalium und Natrium ist in Fig. 4 dargestellt, wobei die Konzentration an Kalium bzw. Natrium in mg/l gegen die Laufzeit des Versuchs in h aufgetragen ist. Man erkennt deutlich, dass die Alkalimetall-Verunreinigungen sehr effektiv aus der Ammoniumdimolybdat-Lösung entfernt wurden. Bereits nach 4 Stunden, d.h. nachdem der Kreislauf 2,5 mal durchlaufen war, betrugen die Konzentrationen an Natrium und Kalium jeweils unter 100 mg/l. Nach weiteren 2,5 Durchläufen betrug der Restgehalt an Natrium und Kalium jeweils etwa 10 mg/l.

### Beispiel 2

Es wurde gemäß Verfahrensvariante, wie sie in Fig. 2 dargestellt ist, vorgegangen. Der Vorratsbehälter (5) wurde mit 10 m³ einer Ammoniummolybdat-Lösung mit einer Mo-Konzentration von 100 g/l, sowie Alkaligehalten von 1000 mg/l Na und 600 mg/l K beschickt. Vom vorhergehenden Versuch befanden sich noch Lösungen mit folgenden Konzentrationen in den restlichen Anlageteilen: Der Kreislauf der ersten Membranfiltrations-Einheit wies eine Mo-Konzentration von 200 g/l auf, die Na-Konzentration lag bei 30 mg/l, der K-Gehalt bei 17 mg/l. Das Gesamtvolumen im Kreislauf der ersten Membranfiltrations-Einheit betrug 0,5 m³. Im Behälter (11) befanden sich 5 m³ einer Ammoniummolybdat-Lösung mit einem Mo-Gehalt von 30 g/l und etwa den gleichen Alkaligehalten wie die Lösung im Kreislauf der ersten Membranfiltrations-Einheit. Im Kreislauf der zweiten Membranfiltrations-Einheit befanden sich ebenfalls 0,5 m³ einer Ammoniummolybdat-Lösung. Diese Lösung wies eine Mo-Konzentration von 60 g/l auf, wobei die Alkalimetalle wieder die gleichen Gehalte wie die Lösung im Kreislauf der ersten Membranfiltrations-Einheit aufwiesen. Der zweite Behälter (16) war schließlich mit 3 m³ einer Ammoniummolybdat-Lösung mit einem Mo-Gehalt von 2 g/l gefüllt, wobei die Alkali-Konzentrationen bei wiederum 30 mg/l Na und 17 mg/l K lagen. Der Rest des Systems über die Kationenaustauschersäulen (13) und (13a) bis zum Vorratsbehälter (5) hin war ebenfalls mit dieser Ammoniummolybdat-Lösung gefülllt, wobei die Lösung nach den Kationenaustauschersäulen (13) und (13a) allerdings alkalifrei war. In der Membranfiltrationszelle (1) wurde die Membran Nafion® NFM 1121 eingesetzt, in der Membranfiltrationszelle (1a) die Membran Nafion® NFM 1120. Die Kationenaustauschersäulen (13) und (13a) waren mit dem Kationenaustauscher Amberlit® IR-120 beschickt.

Die Anlage wurde gestartet, wobei der ersten Membranfiltrations-Einheit mittels Hochdruckpumpe (6) durchflussgeregelt 10 m³/h der Ammoniummolybdat-Lösung aus dem Vorratsbehälter (5) zugeführt wurden. Die stationären Flüsse betrugen 4 m³/h über Regelventil (9) in den Vorratsbehälter (5), 5,8 m³/h Permeat aus der Membranfiltrationszelle (1), 2,8 m³/h Retentatrücklauf über Ventil (14) in den Vorratsbehälter (5), sowie 3 m³/h Permeat aus der zweiten Membranfiltrationszelle (la). Nachdem die Anlage 15 h betrieben wurde, wurden im Vorratsbehälter (5) die Alkali-Konzentrationen zu 33 mg/l für Na und 20 mg/l für K bestimmt.

## Patentansprüche

1. Verfahren zur Verringerung des Gehalts an Alkalimetall-Verunreinigungen in Ammoniummetallat-Lösungen, **dadurch gekennzeichnet, dass** die Ammoniummetallat-Lösung einer Membranfiltration unterzogen wird.

2. Verfahren nach Anspruch 1, **dadurch gekennzeichnet, dass** das bei der Membranfiltration entstehende Permeat zur Entfernung von darin angereicherten Alkalimetall-Verunreinigungen mit einem Kationenaustauscher behandelt wird.

3. Verfahren nach Anspruch 2, **dadurch gekennzeichnet, dass** das Permeat nach der Behandlung mit dem Kationenaustauscher mit dem Retentat der Membranfiltration vereinigt wird.

4. Verfahren nach Anspruch 3, **dadurch gekennzeichnet, dass** das mit dem gereinigten Permeat wiedervereinigte Retentat erneut der Membranfiltration gemäß Anspruch 1 unterzogen wird, das entstehende Permeat gemäß Anspruch 2 gereinigt und das gereinigte Permeat gemäß Anspruch 3 mit dem nunmehr entstandenen Retentat vereinigt wird, so dass ein kontinuierlicher Kreislauf entsteht, und dass dieser Vorgang solange wiederholt wird, bis die Menge an Alkalimetall-Verunreinigungen in der Ammoniummetallat-Lösung unter einen vorgegebenen Wert gefallen ist.

5. Verfahren nach einem der Ansprüche 1 bis 4, **dadurch gekennzeichnet, dass** es sich bei dem Alkalimetall um Kalium handelt.

6. Verfahren nach einem der Ansprüche 1 bis 5, **dadurch gekennzeichnet, dass** es sich bei dem Ammoniummetallat um Ammoniummolybdat, Ammoniumdimolybdat und/oder Ammoniumpolymolybdat handelt.

7. Verfahren nach einem der Ansprüche 1 bis 6, **dadurch gekennzeichnet, dass** bei der Membranfiltration eine semipermeable Membran auf Polymer- oder Keramikbasis eingesetzt wird.

8. Verfahren nach einem der Ansprüche 1 bis 7, **dadurch gekennzeichnet, dass** als Kationenaustauscher ein Austauscherharz oder flüssige Ionenaustauscher oder Zeolithe eingesetzt werden.

9. Verfahren nach Anspruch 8, **dadurch gekennzeichnet, dass** stark saure Austauscherharze der Typen Lewatit® MonoPlus S 100 H und Lewatit® S 100 H oder Amberlit® IR-120 eingesetzt werden.

10. Verfahren nach einem der Ansprüche 1 bis 9, **dadurch gekennzeichnet, dass** die gereinigte Ammoniummetallat-Lösung, bezogen auf das Metall weniger als 1000 ppm Kalium, besonders bevorzugt weniger als 100 ppm Kalium aufweist.

11. Verfahren nach einem der Ansprüche 1 bis 10, **dadurch gekennzeichnet, dass** die zu reinigende Ammoniummetallat-Lösung aus einem Vorratsbehälter (5) mittels einer Hochdruckpumpe (6) einer als Druckbehälter ausgebildeten Pumpenvorlage (3) zugeführt wird, aus der sie mittels einer Umlaufpumpe (2) in eine Membranfiltrationszelle (1) gepumpt und dort in Retentat und Permeat aufgespalten wird, wobei das Retentat in den Vorratsbehälter (5) zurückfließt und das Permeat über einen freien Auslauf (10) in den gerührten Behälter (11) gelangt, von wo aus es über eine Pumpe (12) mindestens einer Kationenaustauschersäule (13) und nach Durchfließen der Kationenaustauschersäule (13) wieder dem Vorratsbehälter (5) zugeführt wird.

12. Verfahren nach einem der Ansprüche 1 bis 11, **dadurch gekennzeichnet, dass** die Membranfiltration zweistufig durchgeführt wird, wobei die beiden Membranfiltrationsstufen als Gegenstromkaskaden geschaltet werden, und das Permeat der ersten Membranfiltration einer zweiten Membranfiltration zugeführt, das dabei entstehende zweite Permeat mit einem Kationenaustauscher behandelt, und das so gereinigte zweite Permeat mit dem Retentat der ersten Membranfiltration vereinigt wird.
